# EUROPÄISCHE PATENTANMELDUNG

(11) **EP 4 008 688 A1**
(43) Veröffentlichungstag der Anmeldung: **08.06.2022**
(21) Anmeldenummer: 21211866.5
(22) Anmeldetag: 02.12.2021
(51) Int. Cl.: C02F 1/00, B01D 27/08, B01D 27/10, B01D 27/02

(54) **FILTERPATRONE UND FILTERVORRICHTUNG**

(30) Priorität: 04.12.2020 DE 102020007395
(71) Anmelder: Götz, Christoph, 30179 Hannover (DE)
(72) Erfinder: Götz, Christoph, 30179 Hannover (DE)
(74) Vertreter: Rossmanith, Manfred

(57) **Zusammenfassung**

Es wird eine Filterpatrone (200) zur Filtration von Flüssigkeiten vorgeschlagen, die ein Gehäuse (203) mit einem Gehäuseoberteil (201) und einem Gehäuseunterteil (202) umfasst, das eine Auslauföffnung für gefiltertes Wasser sowie einen Innenraum aufweist, der Filtermaterial aufnimmt. Das Gehäuseoberteil (201) umfasst eine Einlassöffnung (205) für ungefiltertes Wasser. In dem Gehäuseoberteil (201) ist ein Hohlraum ausgebildet, in welchen Teile einer in das Gehäuse integrierten Komponente (209) hineinragen. Die Komponente (209) ist von dem Gehäuse (201) lösbar. Die Filterpatrone (200) ist universell einsetzbar zur Instandhaltung von Filtervorrichtungen mit und ohne Ventil in einem Strömungskanal für ungefiltertes Wasser. Bei der von dem Gehäuse (201) lösbaren Komponente handelt es sich insbesondere um einen Ventilöffner (209), der in das Gehäuse (201) integriert ist. Dabei ist die Verbindung zwischen der Komponente (209) und dem Gehäuse (201) so schwach ausgebildet, dass ein Nutzer die Komponente (209) aus dem Gehäuse (201) ausbrechen kann. Auf diese Weise ist die Komponente von dem Gehäuse (201) ohne Werkzeug lösbar.

## Beschreibung

### Gebiet

Die Erfindung betrifft eine Filterpatrone für eine Filtervorrichtung zur Filtration von Flüssigkeiten, insbesondere eine Filterpatrone für eine

Tischwasserfiltervorrichtung. Weiterhin betrifft die Erfindung eine Filtervorrichtung, die mit einer erfindungsgemäßen Filterpatrone ausgerüstet ist, sowie ein Verfahren zum Wechseln einer Filterpatrone in einer Filtervorrichtung.

### Hintergrund

Vorrichtungen zur Filtration von Flüssigkeiten werden häufig dazu eingesetzt, um die Sauberkeit von Wasser zu verbessern und nicht gewünschte gelöste Stoffe zu reduzieren oder ganz zu entfernen. Solche Vorrichtungen werden im Folgenden auch kurz als Filtervorrichtung bezeichnet. Typischerweise ist die Filtervorrichtung hierfür mit einer Filterpatrone ausgerüstet, die austauschbar ist, weil sich im Gebrauch der Filtervorrichtung die Filterpatrone verbraucht. In der Filterpatrone ist für die Reinigung von Rohwasser und Entfernung von gelösten Stoffen ein Filtermaterial enthalten, das beispielsweise Aktivkohle und ein lonentauschermaterial in Form eines Granulats umfasst. Die Filtervorrichtung wird zum Beispiel als Tischwasserkrug bzw. Tischwasserfiltervorrichtung, als Wassertank eines Gerätes zur Zubereitung von Heißgetränken oder als Wassertank in einem Kühlschrank eingesetzt.

Typischerweise besteht eine Tischwasserfiltervorrichtung aus einem Sammelgefäß zur Aufnahme von gefiltertem Wasser, in welches ein Einlauftrichter eingesetzt ist. Der Einlauftrichter weist eine Aufnahmekammer für eine Filterpatrone auf, in die ungefiltertes Rohwasser einströmt, das die Filterpatrone als gefiltertes Wasser wieder verlässt. Der Einlauftrichter weist ein Reservoir zur Aufnahme des ungefilterten Rohwassers und eine Auslauföffnung auf, durch die das gefilterte Wasser den Einlauftrichter verlässt, um in dem Sammelgefäß der Filtervorrichtung gesammelt zu werden. Es gibt Ausführungsformen einer solchen Filtervorrichtung, bei denen in einem Strömungskanal, der zu der Auslauföffnung führt, ein Ventil angeordnet ist, das die Auslauföffnung bzw. den Strömungskanal verschließt, wenn keine Filterpatrone in dem Einlauftrichter eingesetzt ist. Wenn eine Filterpatrone in den Einlauftrichter eingesetzt wird, dann wird das Ventil in der Auslassöffnung durch mechanische Wechselwirkung zwischen einem Ventilkörper und der Filterpatrone geöffnet.

Eine solche Filtervorrichtung ist beispielsweise in der DE 20 2016 008 866 U1 beschrieben. Diese Filtervorrichtung weist in einem Strömungsweg für das gefilterte Wasser ein Ventil auf, dass beim Einsetzen einer speziell ausgestalteten Filterpatrone geöffnet wird. Für viele Nutzer hat das Ventil in der praktischen Handhabung der Filtervorrichtung keine Vorteile, bringt aber den Nachteil mit sich, dass ein Nutzer verbrauchte Filterpatrone nur durch auf das Ventil abgestimmte Filterpatronen ersetzen kann, was die Auswahl von Filterpatronen für die Instandhaltung der Filtervorrichtung erheblich einschränkt.

In der DE 10 2020 005 634.2 wird daher ein Instandhaltungsset vorgeschlagen, das neben einer Filterpatrone auch einen Ventilöffner umfasst, der dazu geeignet ist, ein Ventil in einem Strömungspfad einer Filtervorrichtung zu öffnen. Die Filterpatrone muss daher nicht mehr auf das Ventil der Filtervorrichtung abgestimmt sein. Da das Instandhaltungsset mindestens zweiteilig ist, ist der Aufwand hinsichtlich Herstellung und Verpackung allerdings höher als bei einer einfachen Filterpatrone.

Hiervon ausgehend hat die vorliegende Erfindung die Aufgabe, eine Filterpatrone zu schaffen, um eines oder mehrere der eingangs genannten Probleme zu überwinden oder zumindest zu verbessern.

### Beschreibung der Erfindung

Zur Lösung dieser Aufgabe schlägt die Erfindung nach einem ersten Aspekt eine Filterpatrone zur Filtration von Flüssigkeiten vor, die ein Gehäuse mit einem Gehäuseoberteil und einem Gehäuseunterteil umfasst, das eine Auslauföffnung für gefiltertes Wasser sowie einen Innenraum aufweist, der Filter- und/oder lonenaustauschermaterial aufnimmt. Das Gehäuseoberteil umfasst eine Einlassöffnung für ungefiltertes Wasser. In dem Gehäuseoberteil ist ein Hohlraum ausgebildet, in welchen Teile einer in das Gehäuse integrierten Komponente hineinragen. Die Komponente ist von dem Gehäuse lösbar.

Die Filterpatrone ist universell einsetzbar zur Instandhaltung von Filtervorrichtungen mit und ohne Ventil in einem Strömungskanal für ungefiltertes Wasser. Bei der von dem Gehäuse lösbaren Komponente handelt es sich insbesondere um einen Ventilöffner, der in das Gehäuse, vorzugsweise in das Gehäuseoberteil integriert ist. Dabei ist die Verbindung zwischen der Komponente und dem Gehäuse so schwach ausgebildet, dass ein Nutzer die Komponente aus dem Gehäuse ausbrechen kann. Auf diese Weise ist die Komponente von dem Gehäuse ohne Werkzeug lösbar. Dadurch entstehen zwei getrennte Komponenten, nämlich auf der einen Seite die Filterpatrone ohne den Ventilöffner und der Ventilöffner auf der anderen Seite. Beide Komponenten bilden ein Instandhaltungsset zur Instandhaltung von Filtervorrichtungen, die ein Ventil in einem Strömungspfad für ungefiltertes Wasser aufweisen. Dadurch dass Komponenten erst bei dem Nutzer voneinander getrennt werden entstehen Vorteile bei der Verpackung und dem Transport, weil der zunächst in das Gehäuse integrierten Ventilöffner ein kleines und relativ zerbrechliches Teil ist.

Bei einer Weiterbildung der Filterpatrone weisen das Gehäuseunterteil und das Gehäuseoberteil jeweils einen umlaufenden Anschlussrand auf, an dem sie zusammengefügt sind. Die Anschlussränder verlaufen in einer Trennebene und definieren dadurch die Trennebene. Der Innenraum des Gehäuseunterteil liegt auf der einen Seite und der Hohlraum des Gehäuseoberteil des auf der anderen Seite der Trennebene. Die Komponente in das Oberteil integriert ist.

Die in den Hohlraum hineinragenden Teile der Komponente sind innerhalb des Hohlraumes vor mechanischer Beschädigung geschützt. Die Trennebene ermöglicht die Anbringung einer Schicht oder Wand, um zu verhindern, dass das Filtermaterial aus dem Gehäuseunterteil in das Gehäuseoberteil eindringt und von dort aus der Einlauföffnung herausfällt.

Bei einer vorteilhaften Ausführungsform der Filterpatrone ist der Hohlraum des Oberteils durch eine flüssigkeitsdurchlässige Schicht von dem Innenraum des Unterteils getrennt. In den Hohlraum mündet die Einlauföffnung für ungefiltertes Wasser.

Die flüssigkeitsdurchlässige Schicht ist zum Beispiel ein Vliesmaterial oder ein Sieb, die verhindern, dass granulatförmiges Filter- oder lonentauschermaterial durch die eine oder mehreren Einlauföffnungen herausrieselt, wenn die Filterpatrone auf den Kopf gestellt wird.

Bei einer vorteilhaften Weiterbildung der Filterpatrone weist das Gehäuseoberteil Seitenwände auf, die den Hohlraum gemeinsam mit einer Oberseite des Oberteils und der flüssigkeitsduchlässigen Schicht begrenzen.

Dieser Aufbau des Gehäuseoberteils gestattet eine einfache Montage der flüssigkeitsdurchlässigen Schicht, durch die ungefiltertes Wasser in die Filterpatrone einfließen kann, während kein Filtermaterial aus der Filterpatrone austreten kann.

Bei einer zweckmäßigen Ausführungsform ist das Oberteil so ausgebildet, dass die zweite Komponente von dem Oberteil lösbar ist.

Das Oberteil ist einstückig gespritzt. Die zweite Komponente, zum Beispiel ein Ventilöffner, kann von einem Benutzer ausgebrochen werden. Dabei entsteht eine weitere Einlauföffnung für ungefiltertes Wasser.

Bei einer Abwandlung der Filterpatrone weist das Oberteil mehrere Hohlräume auf, insbesondere zwei Hohlräume. Die abgewandelte Filterpatrone ist symmetrisch aufgebaut und hat dadurch fertigungstechnische Vorteile.

Um diese Vorteile in vollem Umfang zu nutzen ist es vorteilhaft, wenn in das Oberteil zwei Komponenten, insbesondere zwei Ventilöffner integriert sind, von denen Teile in jeweils einen Hohlraum hineinragen. Beide Komponenten sind von dem Gehäuse lösbar.

Besonders vorteilhaft ist es, wenn die von dem Gehäuse lösbare Komponente als Ventilöffner ausgebildet ist. Bei Vorhandensein von mehreren lösbaren Komponenten kann auch mehr als eine Komponente als Ventilöffner ausgebildet sein.

Nach einem zweiten Aspekt schlägt die Erfindung eine Filtervorrichtung zur Filtration von Flüssigkeiten vor, die einen Einlauftrichter mit einem Strömungskanal aufweist. Der Strömungskanal mündet in einer Auslauföffnung und ist mit einem Ventil verschließbar. In den Einlauftrichter ist eine Filterpatrone gemäß dem ersten Aspekt der Erfindung eingesetzt.

Schließlich wird nach einem dritten Aspekt der Erfindung ein Verfahren zum Wechseln einer Filterpatrone in einer Filtervorrichtung gemäß dem zweiten Aspekt der Erfindung vorgeschlagen. Das Verfahren umfasst folgende Schritte:
- Bereithalten einer unverbrauchten Filterpatrone nach dem ersten Aspekt der Erfindung;
- Entfernen eines Ventilöffners aus einem Gehäuseoberteil der Filterpatrone;
- Entnehmen einer verbrauchten Filterpatrone aus dem Einlauftrichter;
- Entnehmen des Einlauftrichter aus dem Sammelgefäß;
- Einstecken des Ventilöffners in die Auslauföffnung an der Unterseite des Einlauftrichters, um das Ventil zu öffnen;
- Einsetzen des Einlauftrichter in das Sammelgefäß; und
- Einsetzen der unverbrauchten Filterpatrone in den Einlauftrichter.

### Kurze Beschreibung der Zeichnung

Nachfolgend wird die Erfindung anhand einer Ausführungsform unter Bezugnahme auf die begleitenden Figuren exemplarisch näher erläutert. Alle Figuren sind rein schematisch und nicht maßstäblich. Es zeigen:
- Fig. 1: eine Filtervorrichtung in Gestalt eines Wasserkruges in einer perspektivischen Ansicht;
- Fig. 2A: eine perspektivische Ansicht einer Filterpatrone schräg von oben;
- Fig. 2B: ein vergrößerter Ausschnitt aus Figur 2A;
- Fig. 3A: einen Ausschnitt aus einem Einlauftrichter der Filtervorrichtung aus Figur 1 im Querschnitt;
- Fig. 3B: eine vergrößerte Draufsicht auf einen Ausbruch des Bodens des Einlauftrichters aus Figur 3A;
- Fig. 4A-4E: ein Ventilöffner für ein Ventil in einem Auslaufkanal des Einlauftrichters aus Figur 3A;
- Fig. 5A: den Einlauftrichter aus Figur 3A mit eingesetzter Filterpatrone und eingesetztem Ventilöffner;
- Fig. 5B: einen vergrößerten Ausschnitt aus Figur 5A;
- Fig. 5C: Führungslaschen an der Unterseite Filterpatrone aus Figur 2;
- Fig. 6A: einen Querschnitt durch ein Gehäuseoberteil der Filterpatrone;
- Fig. 6B: eine Draufsicht auf die Innenseite des Gehäuseoberteil aus Figur 6A; und
- Fig. 7: ein schematisches Flussdiagramm für ein erfindungsgemäßes Verfahren.

Gleiche oder ähnliche Elemente sind in den Figuren mit gleichen oder ähnlichen Bezugszeichen versehen.

### Ausführungsbeispiel

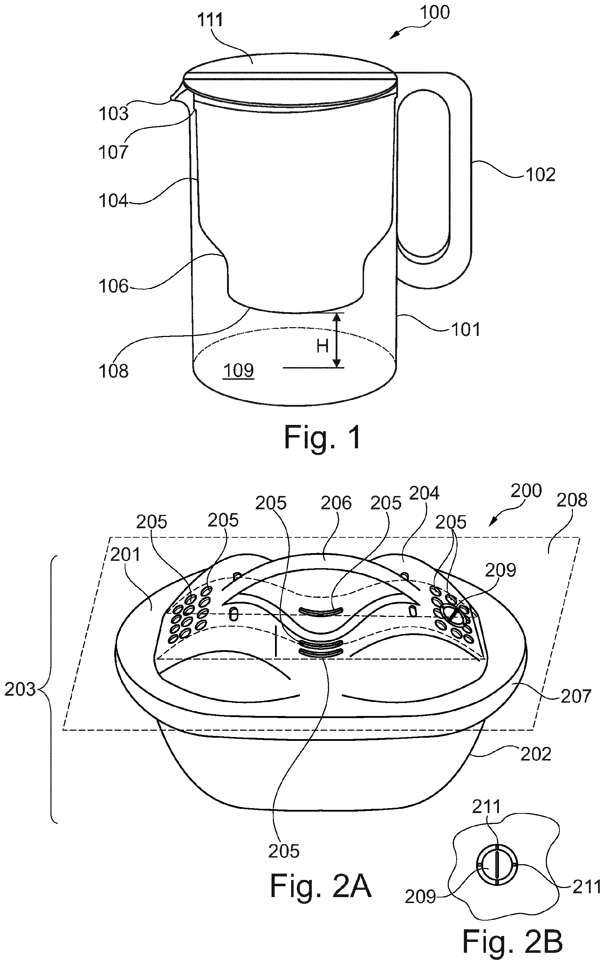

Figur 1 zeigt in einer perspektivischen Ansicht von der Seite ein Ausführungsbeispiel einer Vorrichtung 100 zur Filtration von Flüssigkeiten. Die Vorrichtung 100 ist bei dem dargestellten Ausführungsbeispiel als Tischwasserkrug ausgebildet und weist ein Sammelgefäß 101 zur Aufnahme von gefiltertem Wasser auf. An dem Sammelgefäß 101 ist zu seiner Handhabung ein Griff 102 angeordnet. Weiterhin weist das Sammelgefäß 101 an seinem oberen Rand eine Ausgießtülle 103 auf. Im Gebrauch der Vorrichtung kann ein Benutzer das Sammelgefäß 101 an dem Griff 102 fassen und über die Ausgießtülle 103 gefiltertes Wasser beispielsweise in ein Glas (nicht dargestellt) ausgießen. In das Sammelgefäß 101 ist ein oben offener Einlauftrichter 104 eingesetzt, der in seinem unteren Bereich eine Aufnahmekammer 106 für eine Filterpatrone 200 (Figur 2A) aufweist. Der Einlauftrichter 104 weist an seinem oberen Rand einen umlaufenden Flansch 107 auf, der auf der Oberkante des Sammelgefäßes 101 aufliegt, so dass der Einlauftrichter 104 in dem Sammelgefäß 101 gehaltert ist. Ein Boden 108 des Einlauftrichters 104 hat dabei einen Abstand H von einem Boden 109 des Sammelgefäßes 101. Der Boden 108 des Einlauftrichters 104 weist eine oder mehrere Auslauföffnungen auf, aus der oder denen gefiltertes Wasser aus dem Einlauftrichter 104 in das Sammelgefäß 101 fließt. Der Einlauftrichter 104 ist auf seiner Oberseite mit einem abnehmbaren Deckel 111 verschlossen, der verhindert, dass im Gebrauch der Filtervorrichtung 100 Staub oder Schmutzpartikel in den Einlauftrichter 104 hineinfallen.

In Figur 2A ist eine schematische perspektivische Ansicht schräg von oben auf eine Filterpatrone 200 dargestellt. Die Filterpatrone 200 bildet eine erste Komponente eines Instandhaltungssets für eine Tischwasserfiltervorrichtung. Das Gehäuseoberteil 201 und das Gehäuseunterteil 202 bilden gemeinsam ein Gehäuse der Filterpatrone 200, das als Ganzes mit dem Bezugszeichen 203 bezeichnet ist. In dem Gehäuse 203 der Filterpatrone ist Filtermaterial aufgenommen. Das Filtermaterial liegt zum Beispiel als Filtergranulat vor. Es können auch unterschiedliche Filtermaterialien zum Einsatz kommen, um Partikel, unerwünschte Ionen und/oder Bakterien aus dem Wasser zu entfernen. Das Gehäuseoberteil 201 weist in seiner Oberseite 204 eine Mehrzahl von Einlauföffnungen 205 auf, durch die ungefilterte Flüssigkeit, insbesondere Wasser, in das Innere der Filterpatrone 200 strömt. Ein Griffteil 206 ermöglicht es, die Filterpatrone 200 zu fassen und für einen allfälligen Wechsel der Filterpatrone 200 aus der Aufnahmekammer 106 des Einlauftrichters 104 herauszuziehen. Am oberen Rand des Gehäuseunterteils 201 ist ein Dichtrand 207 erkennbar. Eine Naht, die in Figur 2 von dem Dichtrand 207 verdeckt ist, entlang der das Gehäuseunterteil 202 und das Gehäuseoberteil 201 miteinander verbunden sind, verläuft innerhalb einer Ebene, die eine Trennebene 208 zwischen Gehäuseunterteil 202 und dem Gehäuseoberteil 201 bildet. In dem Gehäuseoberteil 201 ist ein Ventilöffner 209 integriert, dessen Aufbau und Funktion im Folgenden noch näher erläutert wird. Der Ventilöffner 209 ist zum Beispiel einstückig mit dem Gehäuseoberteil 201 gespritzt, wobei der Ventilöffner 209 über dünne Brücken 211 mit dem Gehäuseoberteil verbunden ist, die in dem vergrößerten Ausschnitt in Figur 2B erkennbar sind.

Bei dem in Figur 2A dargestellten Ausführungsbeispiel ist nur ein Ventilöffner 209 an der rechten Seite der Filterpatrone 200 angeordnet. In einem anderen Ausführungsbeispiel sind in den Gehäuseoberteil zwei Ventilöffner 209 links und rechts des Griffteils 206 vorgesehen.

Das Gehäuseunterteil hat eine im Wesentlichen ovale Form, die in Längsrichtung zum Beispiel 70-80 mm und in Querrichtung 40-50 mm lang ist.

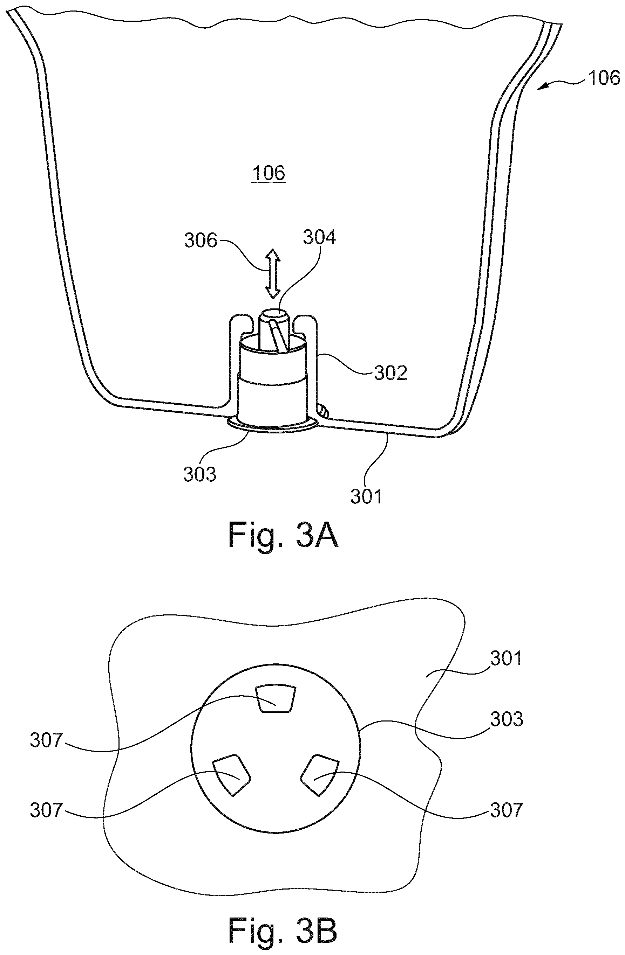

Figur 3A zeigt die Aufnahmekammer 106 des Einlauftrichter 104 im Querschnitt.

Die Aufnahmekammer 106 hat einen Boden 301, der einen Rohransatz 302 aufweist. In den Rohransatz 302 ist ein Ventilgehäuse 303 eingesetzt, das einen beweglichen Ventilkörper 304 aufnimmt. Der Ventilkörper 304 ist in vertikaler Richtung hin und her bewegbar. Die Bewegungsrichtung ist in Figur 3A durch einen Doppelpfeil 306 angedeutet. Wenn der Ventilkörper 304 eine in der Darstellung von Figur 3 unten liegenden Endstellung einnimmt, dann liegt der Ventilkörper auf einem Ventilsitz (nicht dargestellt) auf und verschließt einen Strömungsweg für gefiltertes Wasser durch den Rohransatz 302. Der Ventilsitz bildet einen unteren Anschlag für die Bewegung des Ventilkörpers 304. Wenn der Ventilkörper aus seiner unteren Entstellung angehoben ist, dann gibt er den Strömungsweg für Wasser durch den Rohransatz 302 frei. Das Ventilgehäuse 303 ist so ausgestaltet, dass der Ventilkörper 304 in dem Ventilgehäuse 303 gefangen ist und auch dann nicht herausfallen kann, wenn der Einlauftrichter auf den Kopf gestellt wird. Das Ventilgehäuse 303 und der Ventilkörper 304 bilden gemeinsam ein Ventil in dem Strömungsweg für gefiltertes Wasser.

Figur 3B zeigt eine vergrößerte Draufsicht auf einen Ausbruch des Bodens 301, wo das Ventilgehäuse 303 eingesetzt ist. In dieser Ansicht sind drei Auslauföffnungen 307 sichtbar, durch die gefiltertes Wasser ausströmt, wenn der Ventilkörper 304 eine geöffnete Stellung einnimmt, d.h. von seinem Ventilsitz beabstandet ist. Es wird angemerkt, in anderen Ausführungsbeispielen weniger oder mehr als drei Auslassöffnungen 307 vorgesehen sein können. Für die Funktionsweise der Erfindung spielt die genaue Anzahl der Auslassöffnungen 307 keine Rolle.

Der Ventilkörper 304 ist durch die Auslauföffnungen 307 zugänglich, d.h. mit einem länglichen Objekt, das durch die Auslassöffnungen 307 hindurch passt, ist es möglich, den Ventilkörper 304 von seinem Ventilsitz anzuheben. Ein Nutzer kann diese Gegebenheit ausnutzen und das Ventil mithilfe des Ventilöffners 209 in eine geöffnete Stellung bringen, was gleichbedeutend ist mit dem Anheben des Ventilkörpers 304 von seinem Ventilsitz.

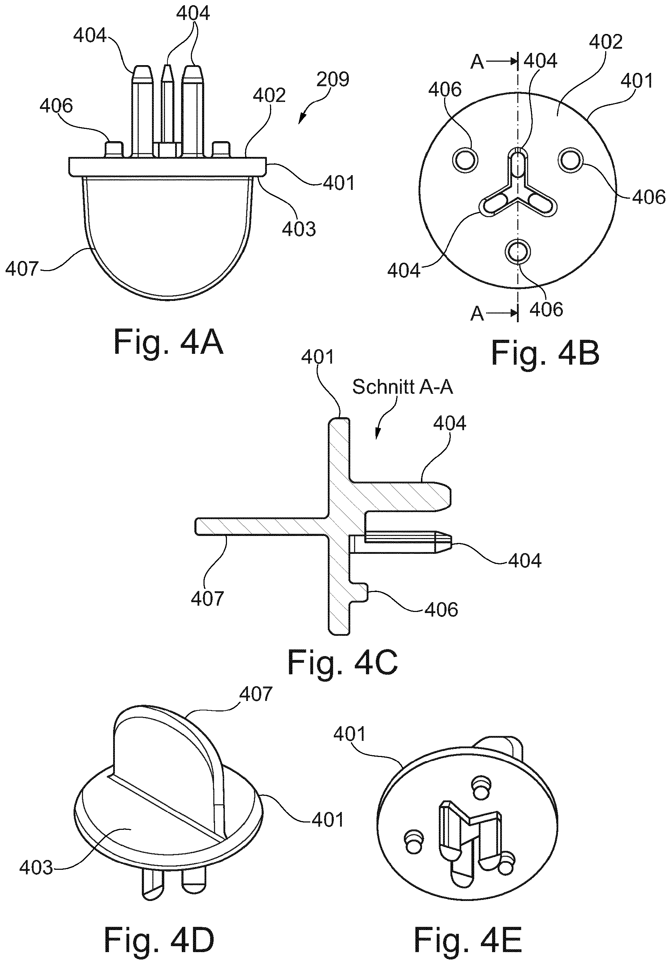

Figur 4A zeigt den Ventilöffner 209 in einer Ansicht von der Seite. Der Ventilöffner 209 weist eine Grundplatte 401 mit einer ersten Hauptfläche 402 und einer zweiten Hauptfläche 403 auf. Auf der ersten Hauptfläche sind drei Dorne 404 angeordnet, die sich senkrecht über die erste Hauptfläche 402 der Grundplatte 401 erheben. Die Abmessungen und die Anordnung der Dorne 404 auf der Grundplatte 401 sind so gewählt, dass die Dorne 404 in die Auslauföffnungen 307 einführbar sind. In dem dargestellten Ausführungsbeispiel haben die Dorne 404 einen rechtwinkligen Querschnitt und sind an ihrer Spitze angefast, um das Einführen in die Auslassöffnungen 307 zu erleichtern. Auf der zweiten Hauptfläche 403 ist ein Griffstück 407 angeordnet, das es einem Nutzer ermöglicht, den Ventilöffner 209 mit den Fingern zu fassen und in die Auslauföffnungen 307 manuell einzuführen bzw. herauszuziehen. Die Anzahl der Dorne 404 ist normalerweise an die Anzahl der Auslauföffnungen 307 angepasst. Grundsätzlich ist es aber auch möglich, dass die Anzahl der Dorne 404 kleiner ist als die Anzahl der Auslauföffnungen 307, beispielsweise ist nur ein Dorn vorgesehen, obwohl drei Auslauföffnungen vorhanden sind. In einem anderen Ausführungsbeispiel trägt der Ventilöffner 209 drei Dorne 404 und wird in einen Ventilkörper 303 mit sechs Auslauföffnungen 307 gesteckt. Andere Kombinationen sind ebenfalls denkbar.

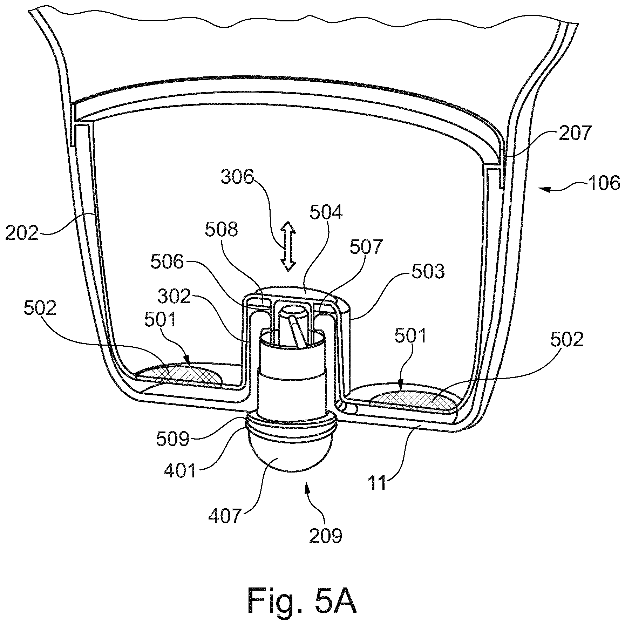

Einmal in die Auslassöffnungen 307 eingeführt, ist der Ventilöffner 209 in dieser Position reibschlüssig gehaltert wie nachfolgend im Zusammenhang mit Figur 5A erläutert werden wird. Auf der ersten Hauptfläche 402 sind weiterhin drei Abstandshalter 406 in Umfangsrichtung zwischen den Dornen 404 angeordnet. Die Abstandshalter 406 verhindern, dass der Ventilöffner 209 so weit in die Auslauföffnung in 307 eingeführt werden kann, dass die Grundplatte 401 des Ventilöffner 209 die Auslassöffnungen 307 vollständig verschließt.

Figur 4B zeigt eine Draufsicht auf die Grundplatte 401 des Ventilöffners 209. Figur 4C ist eine Querschnittsansicht des Ventilöffners 209 entlang der Linie A-A aus Figur 4B. Figur 4D zeigt eine perspektivische Ansicht des Ventilöffners 209 mit einem Blick schräg von oben auf das Griffstück 407 und Figur 4E zeigt eine perspektivische Ansicht des Ventilöffners 209 schräg von unten mit Blick auf die Dorne 404.

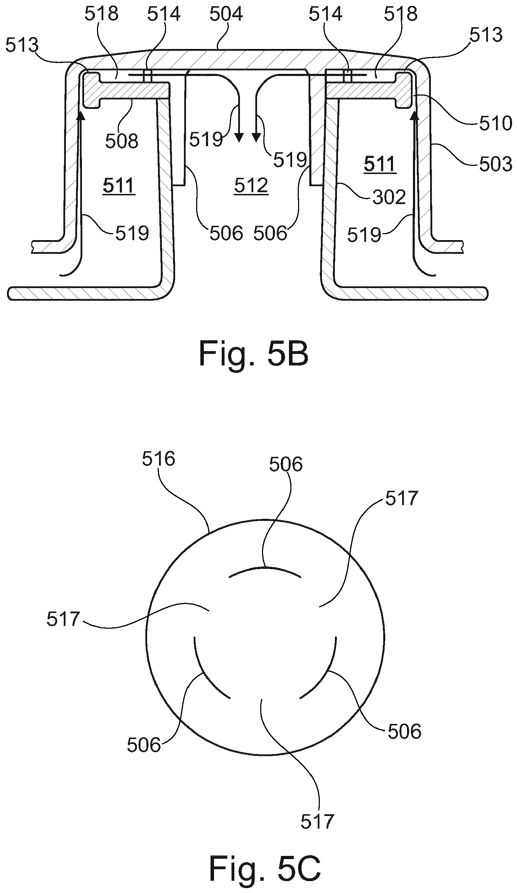

Figur 5A veranschaulicht ähnlich wie Figur 3 einen Querschnitt durch die Aufnahmekammer 106 des Einlauftrichters 104 mit einer eingesetzten Filterpatrone, wobei von der Filterpatrone der Übersichtlichkeit halber nur das Gehäuseunterteil 202 dargestellt ist. Außerdem ist in Figur 5 das Filtermaterial der Übersichtlichkeit halber nicht dargestellt. Der Dichtrand 207 liegt an der Innenwand der Aufnahmekammer 106 an, sodass kein ungefiltertes Wasser an der Filterpatrone 200 vorbei in das Sammelgefäß 101 (Figur 1) fließen kann. Das Gehäuseunterteil 202 weist Auslauföffnungen 501 auf, die mit Auslaufsieben 502 verschlossen sind. Das Gehäuseunterteil 202 weist eine Einstülpung 503 auf, die den Rohransatz 302 mit Abstand übergreift. An einem Boden 504 der Einstülpung 503 sind Führungslaschen 506 angeformt, die mit ihrer Außenseite an einem ringförmigen radial nach innen gerichteten Vorsprung 507 anliegen, der an dem Rohransatz 302 angeformt ist. Die Führungslaschen 506 übergreifen den Ventilkörper 304 mit Spiel, sodass der Ventilkörper 304 in einer vertikalen Richtung frei bewegbar ist, die mit dem Doppelpfeil 306 angedeutet ist. Eine Dichtscheibe 508, die über die Führungslaschen 506 aufgesteckt ist und zwischen einem stirnseitigen Ende des Rohransatzes 302 unter dem Boden 504 der Einstülpung 503 angeordnet ist, bildet einen Anschlag für die Einsetzbewegung der Filterpatrone. Diese Anordnung bildet einen Strömungskanal aus, der von den Auslaufsieben 502 durch den Rohransatz 302 zu den Auslauföffnungen 307 in dem Ventilgehäuse 303 führt. Der Strömungskanal wird mit Bezug zu Figur 5B noch in weiterer Einzelheit beschrieben. Im Betrieb der Filtervorrichtung 100 ist von einer Unterseite des Einlauftrichters 104 her der Ventilöffner 209 in die Auslassöffnungen 307 eingesteckt. Dabei heben die Dorne 404 den Ventilkörper 304 von seinem Ventilsitz, und geben den Strömungsweg durch den Rohransatz 302 und das Ventilgehäuse 303 frei. Die Einstecktiefe des Ventilöffners 209 bzw. der Dorn 404 in die Auslassöffnungen 307 ist entweder dadurch begrenzt, dass eine Stirnseite des Ventilkörpers 304 an dem Boden 504 der Einstülpung 503 anstößt oder dadurch, dass die Abstandshalter 406 des Ventilöffners 209 an einer Außenseite des Ventilkörpers 304 anliegen. Welche der beiden Möglichkeiten eintritt, hängt von der Dimensionierung des Ventilkörpers 303 und der Dorne 404 ab. In jedem Fall bleibt ein Spalt 509 zwischen der Außenseite des Ventilgehäuses 303 und der Grundplatte 401 des Ventilöffners. Auf diese Weise ist sichergestellt, dass die Grundplatte 401 des Ventilöffners 209 die Auslassöffnungen 307 nicht blockiert. Durch den Spalt 509 strömt im Betrieb der Filtervorrichtung 100 gefiltertes Wasser.

Figur 5B zeigt einen vergrößerten Ausschnitt aus Figur 5A und illustriert den Strömungsweg des gefilterten Wassers im Bereich der Einstülpung 503. Figur 5B zeigt den Rohransatz 302 und die den Rohransatz übergreifende Einstülpung 503 sowie die dazwischen angeordnete Drosselscheibe 508. Die Drosselscheibe 508 dient dazu, um die von der Filterpatrone 200 pro Zeiteinheit abgegebene Strömungsmenge von gefiltertem Wasser zu begrenzen. In Figur 5B ist der Übersichtlichkeit halber das aus Ventilgehäuse 303 und Ventilkörper 304 bestehende Ventil sowie der Ventilöffner 209 weggelassen. Da - wie oben beschrieben - das Ventil durch den Ventilöffner 209 in einer geöffneten Stellung gehalten ist, ist es für das Verständnis des Strömungsweges auch nicht weiter von Belang.

In Einbaulage in der Einstülpung 503 des Gehäuseunterteils 202 (Figur 2) bildet die Drosselscheibe 508 einen Ringspalt 510, der einen Strömungsweg frei gibt für das Wasser aus einem Raum 511, der zwischen dem Rohransatz 302 und der Einstülpung 503 gebildet ist, zu einem Innenraum 512 in dem Rohransatz 302. In diesem Innenraum 512 ist in Wirklichkeit auch das Ventilgehäuse und der Ventilkörper angeordnet, die in Figur 5B wie erwähnt nicht dargestellt sind. Der zwischen einem Rand 513 der Drosselscheibe 508 und der Einstülpung 503 gebildete Ringspalt 510 ist ungefähr 0,1mm breit. In Figur 5B ist die Breite des Ringspalts 510 zur besseren Veranschaulichung übertrieben dargestellt. Die Drosselscheibe 508 ist auf den Führungslaschen 506 zentriert und stützt sich mit Vorsprüngen oder Höckern 514 gegen den Boden 504 der Einstülpung 503 ab.

Figur 5C zeigt schematisch die Anordnung der Führungslaschen 506 in der Einstülpung 503. Mit einem Kreis 516 ist der Rand des Bodens 504 der Einstülpung 503 veranschaulicht. Zwischen den Laschen 506 sind breite Spalte 517 vorhanden.

Wieder mit Bezug auf Figur 5B strömt das Wasser bei diesem Ausführungsbeispiel aus dem Zwischenraum 511 durch den Ringspalt 510 in einen Zwischenraum 518. Aus dem Zwischenraum 518 strömt das Wasser durch die Spalte 517 (Figur 5C) in den Innenraum 512 des Rohransatzes 302 und durch das nicht dargestellte Ventil. Schließlich tritt das gefilterte Wasser aus den Auslassöffnungen 307 aus dem Einlauftrichter 104 aus und sammelt sich im unteren Bereich des Sammelgefäßes 101 (Figur 1). Der Strömungsweg des Wassers ist in Figur 5B durch Pfeile 519 angedeutet.

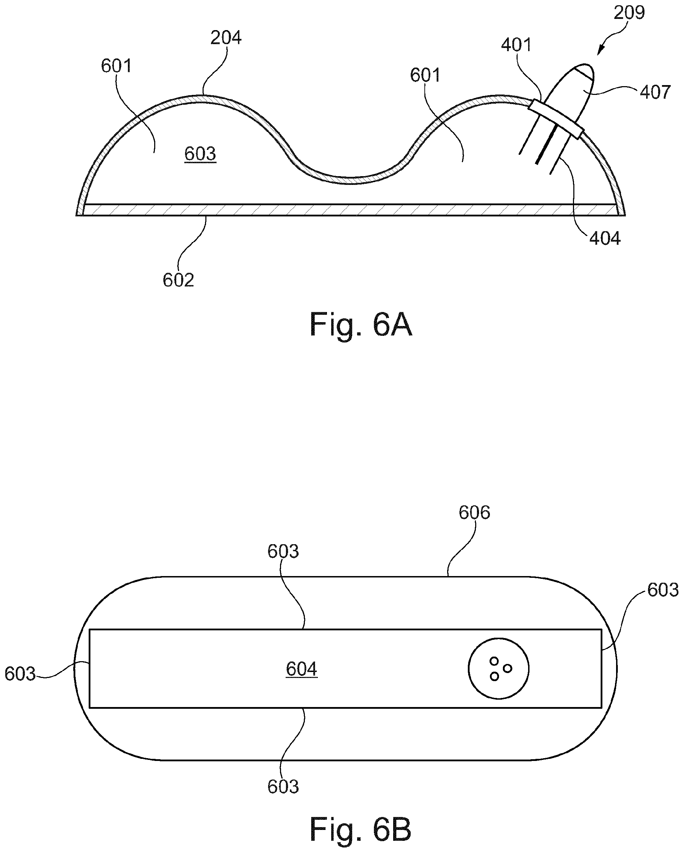

Figur 6A zeigt das Gehäuseoberteil 201 der Filterpatrone 200 in einem Querschnitt. In dieser Darstellung ist erkennbar, dass die filigranen Dorne 404 des Ventilöffners 209 in einen Hohlraum 601 hineinragen. Auf der gegenüberliegenden Seite des Gehäuseoberteils 201 ist ein weiterer Hohlraum 601 gebildet, in welchem bei dem dargestellten Ausführungsbeispiel jedoch kein Ventilöffner 209 vorgesehen ist. Auf der der Oberseite 204 des Gehäuseoberteil 201 gegenüberliegenden Seite sind die Hohlräume 601 mit einem flüssigkeitsdurchlässigen Vlies 602, insbesondere einem wasserdurchlässigen Vlies, begrenzt, das eine flüssigkeitsdurchlässige Schicht bildet. Das Vlies 602 ist auf Seitenwände 603 gesiegelt oder geklebt die in Figur 6B dargestellt sind. Das Vlies 602 bildet eine Unterseite des Gehäuseoberteils 201 und liegt im zusammengebauten Zustand der Filterpatrone 200 in der Trennebene 208. In der in Figur 6B dargestellten Draufsicht auf die Innenseite des Gehäuseoberteils ist auch der Anschlussrand 606 des Gehäuseoberteils 201 gezeigt. Ein entsprechender Anschlussrand ist auch an dem Gehäuseunterteil ausgebildet.

Alle Einlauföffnungen 205 liegen innerhalb eines von den Seitenwänden 603 gebildeten Kanals 604. Außerhalb des Kanals 604 sind keine Einlauföffnungen 205 angeordnet, sodass Flüssigkeit, die in die Filterpatrone 200 einströmt, das Vlies 602 passieren muss. Auch der oder die Ventilöffner 209 sind innerhalb des Kanals 604 angeordnet.

Bei einem anderen Ausführungsbeispiel sind in dem Gehäuseoberteil 201 zwei Ventilöffner 209 vorgesehen, die links und rechts des Teils 206 angeordnet sind und in jeweils einen der Hohlräume 601 hineinragen. Normalerweise benötigt ein Nutzer nur einen Ventilöffner 209. Der zweite Ventilöffner ist in Reserve vorhanden, wenn bei der Handhabung des Ventilöffner das 209 ein oder mehrere der Dorne 404 abbrechen. In einem solchen Fall kann der Nutzer auf den zweiten Ventilöffner 209 zurückgreifen.

Das Filtermaterial befindet sich unterhalb der Trennebene 208 in dem Gehäuseunterteil 202. Das Filtermaterial dringt nicht in die Hohlräume 601 ein, weil es von dem Vlies 602 daran gehindert wird. Dadurch ist sichergestellt, dass kein Filtermaterial aus den Einlauföffnungen 205 herausrieseln kann, wenn die Filterpatrone 200 bildlich gesprochen auf den Kopf gestellt wird.

Der Nutzer hat die Möglichkeit unterschiedliche Filterpatronen für einen Patronenaustausch verwenden, wenn die Filterpatrone nach einer bestimmten Gebrauchsdauer der Filtervorrichtung erschöpft ist und ersetzt werden muss. Benutzt der Nutzer eine eingangs beschriebene Filtervorrichtung mit einem Ventil, dann ist der Einsatz eines Ventilöffners notwendig, um eine Filterpatrone verwenden zu können, die nicht auf das Ventil in der Filtervorrichtung abgestimmt ist. Bei der vorliegend vorgeschlagenen Filterpatrone 200 ist mindestens ein Ventilöffner 209 bereits in der Filterpatrone integriert. Die empfindlichen Dorne 404 des Ventilöffners 209 ragen dabei in den Hohlraum 601 in dem Gehäuseoberteil 201 der Filterpatrone 200. Die Dorne 404 sind dadurch vor mechanischer Beschädigung geschützt, sodass der Ventilöffner 209 keine eigene Schutzverpackung für Transport und Vertrieb benötigt. Die Herstellungskosten des Gehäuseoberteil 201 sind nur geringfügig höher als bei einem Gehäuseoberteil ohne integrierten Ventilöffner 209.

Bei Bedarf kann ein Nutzer den Ventilöffner 209 einfach aus dem Gehäuseoberteil ausbrechen, indem er den Ventilöffner an dem Griffteil 407 fasst und hin und her bewegt, wodurch die dünnen Brücken 211 abbrechen und der Ventilheber 209 aus der Filterpatrone 200 entnehmbar ist. Dabei entsteht eine Öffnung in dem Gehäuseoberteil 201, die eine zusätzliche Einlauföffnung bildet. Die zusätzliche Einlassöffnung hat jedoch keinen Einfluss auf die Funktionsweise der Filterpatrone 200. Sämtliche Öffnungen, nämlich die Einlauföffnungen 205 und die nach dem Ausbrechen des Ventilöffner das 209 entstehende zusätzliche Öffnung münden in den Kanal 604. Ungefiltertes Rohwasser strömt damit grundsätzlich immer durch das Vlies 602. Gröbere Partikel, die sich möglicherweise in dem Rohwasser befinden, werden daher zuverlässig von dem Vlies 602 zurückgehalten. Die Strömungsmenge durch die Filterpatrone 200 pro Zeiteinheit wird von der Drosselscheibe 508 bestimmt und ist deshalb unabhängig davon, ob eine zusätzliche Öffnung in dem Gehäuseoberteil 201 vorhanden ist oder nicht.

Bei einem anderen Ausführungsbeispiel ist das Vlies 602 durch ein engmaschiges Sieb ersetzt.

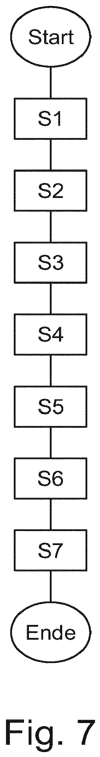

Für einen Patronenwechsel geht der Nutzer gemäß folgender Schritte vor, die in dem Flussdiagramm in Figur 7 schematisch dargestellt sind:
Zunächst hält der Nutzer in einem ersten Schritt S1 eine unverbrauchte Filterpatrone 200 mit einem integrierten Ventilöffner 209 bereit. In einem Schritt S2 löst der Nutzer den Ventilöffner 209 aus dem Gehäuseoberteil 201 der Filterpatrone 200. Anschließend entfernt der Nutzer in Schritt S3 die verbrauchte Patrone aus dem Einlauftrichter und nimmt dann in Schritt S4 den Einlauftrichter 104 aus dem Sammelgefäß 101, um in Schritt S5 von unten den Ventilöffner 209 in die Auslassöffnungen 307 in dem Ventilgehäuse 303 einzustecken. Dabei wird der Ventilkörper 304 in eine geöffnete Stellung gebracht und in dieser Stellung gehalten. Jetzt setzt der Nutzer in Schritt S6 den Einlauftrichter wieder in das Sammelgefäß ein und setzt in einem letzten Schritt S7 eine neue Filterpatrone in die Aufnahmekammer 106 des Einlauftrichter 104 ein. Diese Reihenfolge der Schritte S1-S7 ist nicht zwingend, insbesondere können die Schritte S2 und S3 sowie S4 und S5 miteinander vertauscht werden.

Durch die Verwendung der Filterpatrone mit integrierten Ventilöffner 209 steht dem Nutzer eine größere Auswahl von Filterpatronen für die Instandhaltung der Filtervorrichtung zur Verfügung.

Einmal in die Auslassöffnungen 307 eingesetzt, kann der Ventilöffner 209 von einem Nutzer auch ganz einfach wieder entfernt werden, in dem der Nutzer den Ventilöffner 209 an dem Griffstück 407 fasst und zurückzieht. Es ist somit auch ein Wechsel zwischen unterschiedlichen Filterpatronentypen möglich, d.h. der Nutzer kann von Fall zu Fall entscheiden, ob er eine Filterpatrone verwenden möchte, die mit dem Ventil in dem Einlauftrichter zusammenwirkt oder eine andere Filterpatrone, bei der das nicht der Fall ist und die Verwendung des Ventilöffners notwendig ist.

### Bezugszeichenliste

| | | | |
|---|---|---|---|
| 100 | Filtervorrichtung | 400 | Ventilöffner |
| 101 | Sammelgefäß | 401 | Grundplatte |
| 102 | Griff | 402 | erste Hauptfläche |
| 103 | Ausgießtülle | 403 | zweite Hauptfläche |
| 104 | Einlauftrichter | 404 | Dorne |
| | | 406 | Abstandshalter |
| 106 | Aufnahmekammer | 407 | Griffstück |
| 107 | umlaufender Flansch | 501 | Auslauföffnungen |
| 108 | Einlauftrichterboden | 502 | Auslaufsiebe |
| 109 | Gefäßboden | 503 | Einstülpung |
| | | 504 | Boden der Einstülpung |
| 111 | Deckel | 506 | Führungslaschen |
| | | 507 | Ringförmiger Vorsprung |
| 200 | Filterpatrone | 508 | Drosselscheibe |
| 201 | Gehäuseoberteil I | 509 | Spalt |
| 202 | Gehäuseunterteil | 510 | Ringspalt |
| 203 | Gehäuse als Ganzes | 511 | Raum |
| 204 | Oberseite von | 512 | Innenraum |
| | Gehäusaoberteil | | |
| 205 | Einlauföffnungen | 513 | Rand der Drosselscheibe |
| 206 | Griffteil | 514 | Höcker |
| 207 | Dichtrand | 516 | Kreis |
| 208 | Trennebene | 517 | Spalte |
| 209 | Ventilöffner | 518 | Zwischenraum |
| 211 | Brücken | 519 | Pfeile |
| 301 | Boden | 601 | Hohlraum |
| 302 | Rohransatz | 602 | Vlies |
| 303 | Ventilgehäuse | 603 | Seitenwände |
| 304 | Ventilkörper | 604 | Kanal |
| 306 | Doppelpfeil | 606 | Anschlussrand |
| 307 | Auslauföffnung | | |

## Patentansprüche

1. Filterpatrone zur Filtration von Flüssigkeiten, die ein Gehäuse (203) mit einem Gehäuseoberteil (201) und einem Gehäuseunterteil (202) umfasst, das eine Auslauföffnung (307) für gefiltertes Wasser sowie einen Innenraum aufweist, der Filter- und/oder lonenaustauschermaterial aufnimmt, wobei das Gehäuseoberteil (201) eine Einlassöffnung für ungefiltertes Wasser umfasst, **dadurch gekennzeichnet, dass** in dem Gehäuseoberteil (201) ein Hohlraum (601) ausgebildet ist, in welchen Teile (404) einer in das Gehäuse integrierten Komponente (209) hineinragen und dass die Komponente (209) von dem Gehäuse (201) lösbar ist.

2. Filterpatrone nach Anspruch 1, **dadurch gekennzeichnet, dass** das Unter- und das Gehäuseoberteil (201,202) jeweils einen umlaufenden Anschlussrand aufweisen, an dem sie zusammengefügt sind, dass die Anschlussränder (606) in einer Trennebene (208) verlaufen und dadurch die Trennebene (208) definieren, dass der Innenraum des Gehäuseunterteils auf der einen Seite und der Hohlraum (601) des Gehäuseoberteils (201) auf der anderen Seite der Trennebene (209 liegt und dass die Komponente (209) in das Gehäuseoberteil (201) integriert ist.

3. Filterpatrone nach Anspruch 1 oder 2, **dadurch gekennzeichnet, dass** der Hohlraum (601) des Gehäuseoberteils (201) durch eine flüssigkeitsdurchlässige Schicht (602) von dem Innenraum des Gehäuseunterteils (202) getrennt ist und dass die Einlauföffnung (205) in den Hohlraum (601) mündet.

4. Filterpatrone nach einem der vorstehenden Ansprüche, **dadurch gekennzeichnet, dass** das Gehäuseoberteil (201) Seitenwände (603) aufweist, die den Hohlraum (601) gemeinsam mit einer Oberseite (204) des Gehäuseoberteils (201) und der flüssigkeitsduchlässigen Schicht (602) begrenzen.

5. Filterpatrone nach einem der vorstehenden Ansprüche, **dadurch gekennzeichnet, dass** das Gehäuseoberteil (201) so ausgebildet ist, dass die zweite Komponente (209) von dem Gehäuseoberteil lösbar ist.

6. Filterpatrone nach den Ansprüchen 4 oder 5, **dadurch gekennzeichnet, dass** das Gehäuseoberteil (201) mehrere Hohlräume (601) aufweist, insbesondere zwei Hohlräume.

7. Filterpatrone nach Anspruch 6, **dadurch gekennzeichnet, dass** in jeden Hohlraum (601) Teile (404) von jeweils einer in das Gehäuse (201) integrierten Komponente (209) hineinragen und die Komponenten (209) von dem Gehäuse (201) lösbar sind.

8. Filterpatrone nach einem der vorstehenden Ansprüche, **dadurch gekennzeichnet, dass** die von dem Gehäuse (201) lösbare(n) Komponente(n) (209) ein Ventilöffner ist bzw. Ventilöffner sind.

9. Filtervorrichtung zur Filtration von Flüssigkeiten, die einen Einlauftrichter (104) mit einem Strömungskanal aufweist, wobei der Strömungskanal in einer Auslauföffnung (307) mündet und mit einem Ventil (303,304) verschließbar ist, **dadurch gekennzeichnet, dass** in den Einlauftrichter (104) eine Filterpatrone (200) nach einem der vorstehenden Ansprüche eingesetzt ist.

10. Verfahren zum Wechseln einer Filterpatrone (200) in einer Filtervorrichtung (100) nach Anspruch 8, wobei das Verfahren folgende Schritte umfasst:
- Bereithalten (S1) einer unverbrauchten Filterpatrone nach einem der Ansprüche 1-7;
- Entfernen (S2) eines Ventilöffners (209) aus einem Gehäuseoberteil (201) der Filterpatrone (200);
- Entnehmen (S1) einer verbrauchten Filterpatrone (200) aus dem Einlauftrichter;
- Entnehmen (S2) des Einlauftrichter (104) aus dem Sammelgefäß (101);
- Einstecken (S3) des Ventilöffners (209) in die Auslauföffnung (307) an der Unterseite des Einlauftrichters (104), um das Ventil (303,304) zu öffnen;
- Einsetzen (S4) des Einlauftrichter (104) in das Sammelgefäß (101); und
- Einsetzen (S5) der unverbrauchten Filterpatrone (200) in den Einlauftrichter (101).
